**Europäisches Patentamt**

(19) **European Patent Office**

**Office européen des brevets**

(11) Numéro de publication: **0 250 298**
**B1**

(12) **FASCICULE DE BREVET EUROPEEN**

(45) Date de publication du fascicule du brevet:
07.02.90

(21) Numéro de dépôt: **87401310.5**

(22) Date de dépôt: **11.06.87**

(51) Int. Cl.⁴: **F16K 31/06, F16K 11/048**

---

(54) **Microélectrovanne deux ou trois voies à double membrane d'étanchéité.**

---

(30) Priorité: **20.06.86 FR 8608908**

(43) Date de publication de la demande:
**23.12.87 Bulletin 87/52**

(45) Mention de la délivrance du brevet:
**07.02.90 Bulletin 90/6**

(84) Etats contractants désignés:
**AT BE CH DE ES FR GB GR IT LI LU NL SE**

(56) Documents cités:
**DE-B- 2 645 448**
**FR-A- 1 484 680**
**FR-A- 2 129 602**
**GB-A- 2 059 016**
**US-A- 4 181 154**

(73) Titulaire: **ABX , Société Anonyme dite, 14/16 rue Baudin,
F-92300 Levallois(FR)**

(72) Inventeur: **Champseix, Henri, 4 Avenue Audrun,
F-78360 Montesson(FR)**
Inventeur: **Champseix, Serge, 29 bis rue des Puiseux,
F-78130 Les Mureaux(FR)**

(74) Mandataire: **Lepeudry-Gautherat, Thérèse et al,
ARMENGAUD JEUNE CABINET LEPEUDRY 6, rue du Fg.
St-Honoré, F-75008 Paris(FR)**

---

ACTORUM AG

## Description

L'invention a pour objet une microélectrovanne à deux ou trois voies destinée à tous fluides et particulièrement à des liquides agressifs ou chargés d'impuretés et concerne plus précisément une microélectrovanne à double membrane d'étanchéité.

On sait que les vannes deux ou trois voies manuelles ou motorisées ont pour objet de fermer le passage d'un fluide dans un conduit ou d'orienter un fluide d'un conduit d'alimentation vers l'un ou l'autre de deux conduits de distribution. Pour cela le corps de vanne auquel aboutissent ces conduits est habituellement muni d'un ensemble mobile que selon sa position ouvre ou ferme un orifice. Dans une vanne trois voies l'ensemble mobile obture un orifice en en ouvrant un autre et inversement, et il est par exemple constitué d'une palette pivotante portant un élément souple d'étanchéité, ou encore d'un clapet obturateur à deux faces se déplaçant en translation dans un boîtier entre deux orifices opposés. Ces ensembles, surtout s'ils sont manoeuvrés par un moteur ou - comme c'est le cas habituel dans les électrovannes, par un électroaimant -, doivent être soigneusement réalisés pour que l'étanchéité soit correctement réalisée, même après de fréquentes utilisations. Cela implique bien souvent des systèmes de réglage complémentaires associés à des ressorts de rappel, toutes dispositions qui compliquent le produit et l'alourdissent. Si cela n'a pas trop d'importance pour des utilisations courantes, quant il s'agit par exemple d'orienter de l'eau à pression normale d'un conduit principal vers un conduit de dérivation, il n'en est pas du tout de même dans certains domaines d'utilisation, comme dans le domaine médical, ou des électrovannes classiques ne peuvent être utilisées. Dans ce cas d'application en effet, on ne peut courir le risque que les liquides concernés puissent fuir de l'électrovanne, ou qu'inversement ils puissent être atteints ou pollués par un milieu extérieur quel qu'il soit. D'autre part les microvannes recherchées doivent souvent être de petites tailles, être légères, et susceptibles d'être manoeuvrées par un électroaimant de faible puissance.

Pour résoudre ces problèmes on connaît la solution qui consiste à utiliser un organe obturateur semi-rigide constitué d'une ou plusieurs membranes en matière plastique qui s'appliquent contre une pièce conique jouant le rôle de siège de clapet. Pour que l'étanchéité soit assurée de façon correcte, il faut que les surfaces de la pièce conique et des membranes soient parfaitement usinées, ce qui n'exclue pas pour autant les risques de blocage ou de mauvaise fermeture qui surviennent fréquemment quand le liquide utilisé est chargé d'impuretés.

Dans une autre réalisation connue, telle que décrite dans le FR-A-2 129 602, un tiroir à commande électromécanique est constitué de deux membranes sur lesquelles sont appliqués des anneaux en caoutchouc, chacune des membranes obturant une rigole annulaire dans laquelle débouche un conduit de fluide tranversant le corps du tiroir, un piston étant intercalé entre les deux membranes dans un puits central. Avec cette disposition, l'étanchéité est assurée par une partie centrale de la membrane sur une bordure de la rigole et par conséquent sur une surface formant siège de clapet, de relativement grande surface. De ce fait les pressions de fluide mises en oeuvre dans le tiroir doivent être limitées. Un autre inconvénient de ce type de vanne réside dans le fait qu'au moment du rinçage, du fait que le conduit d'entrée débouche dans le puits central, le rinçage ne s'effectue que d'un côté du puits, sauf si l'on manoeuvre le tiroir pour rincer dans les deux directions.

Dans le but de s'affranchir de ces inconvénients et de répondre aux nécessités d'étanchéité et de miniaturisation, propres à certaines applications particulières, la Demanderesse a imaginé une microélectrovanne deux ou trois voies, de réalisation et de mise en oeuvre simples, capable cependant de tenir à des pressions relativement importantes par rapport à ses dimensions, et notamment adaptée au transfert de liquides agressifs et/ou chargés d'impuretés, et qui se prête à un rinçage rapide et efficace.

Selon une caractéristique principale de l'invention, un équipage mobile jouant le rôle d'organe obturateur de conduits d'arrivée et de départ de fluide dans une chambre intérieure du corps, essentiellement constitué de deux membranes souples montées de part et d'autre d'un noyau qui traverse un puits central prévu dans le corps principal de la microélectrovanne, est réalisé de telle façon que chacune des membranes souples ferme de façon étanche, par une petite partie excentrée de sa surface, le conduit de départ qui débouche dans une zone de la coupelle correspondante écartée du puits central et que le conduit d'arrivée de fluide débouche dans l'une des coupelles dans une zone également écartée du puits central.

Au moins un conduit débouche dans chaque coupelle à l'intérieur d'une couronne débordant de la coupelle et formant un siège pour l'organe obturateur que constitue chaque membrane.

De même au moins un conduit débouche dans une coupelle à l'intérieur d'un évidement réalisé dans le fond de cette coupelle.

Selon une caractéristique particulière de l'invention le noyau de l'équipage mobile est formé de deux parties identiques dont chacune est constituée d'un cylindre se terminant par un plateau muni d'une échancrure et traversée sur toute sa hauteur d'une ouverture axiale et les deux faces opposées du corps principal de la vanne sont coiffées de pièces d'extrémité munies d'ouvertures centrales qui sont fixées au corps principal et pincent chacune des membranes sur les bords des coupelles.

Les diverses pièces composant l'équipage mobile, à savoir un bouchon d'extrémité, les membranes, le noyau central et un organe d'accrochage du noyau mobile de l'électroaimant sont rendus solidaires par une vis qui traverse ledit équipage mobile.

D'autres caractéristiques particulières et avantages de l'invention apparaîtront à la lecture de la description qui va suivre d'un exemple non limitatif de réalisation en référence aux dessins annexés qui représentent :

Figure 1 une vue schémastique en coupe de la microélectrovanne ;

figure 2 une vue éclatée de ses éléments constitutifs ;

figure 3 une vue en plan de la partie supérieure du corps de vanne ;

figure 4 une vue selon IV-IV de la figure 2.

La vanne représentée sur les dessins est essentiellement constituée d'un corps principal de vanne 1 formant un boîtier rectangulaire dont deux faces opposées sont fraisées pour former des coupelles 2 et 3 destinées à servir de logement respectivement à une membrane inférieure 4 et une membrane supérieure 5. Un puits central 6 traverse le corps principal 1 coaxialement aux coupelles 2 et 3. Le corps principal de vanne 1 est muni sur un de ses côtés de trois conduits perforés transversalement à l'axe du puits 6. Un conduit inférieur 7 de départ de fluide débouche dans la coupelle inférieure 2 à l'intérieur d'une couronne débordant le fond de cette coupelle, formant un siège 8 pour l'organe obturateur que constitue la membrane 4 munie d'un petit orifice central. De la même manière un autre conduit supérieur 9 de départ de fluide débouche dans la coupelle supérieure 3 à l'intérieur d'une couronne débordant du fond de cette coupelle, formant un siège 10 pour l'organe obturateur que constitue une autre membrane identique 5. Ainsi, chacune des membranes souples 4, 5 ferme de façon étanche, par une petite partie excentrée de sa surface, le conduit 7, 9 qui débouche lui-même dans une zone de la coupelle correspondante, écartée du puits central 6. Au même niveau que le conduit supérieur 9, est prévu un troisième conduit 11 d'arrivée de fluide qui débouche aussi dans la coupelle 3 mais à l'intérieur d'un évidement 12 réalisé dans le fond de cette coupelle, du côté opposé au siège 10 par rapport au puits 6, et dans une zone également écartée du puits central.

Le puits central 6 est traversé par un noyau 18 constitué de deux parties identiques 18a et 18b. Chaque partie du noyau 18 est constituée d'un cylindre 13 de diamètre légèrement inférieur à celui du puits 6 se terminant par un plateau 14 de plus grand diamètre débordant au moins jusqu'aux orifices 8, 10, 12 prévus au fond des coupelles. Le plateau porte sur le côté une échancrure 15. Le noyau 18 enfin est traversé sur toute sa hauteur d'une ouverture axiale 16, se terminant du côté de l'extrémité de la partie cylindrique 13 , par un évidement tronconique 17. Les deux parties 18a et 18b sont montées symétriquement et en appui l'une contre l'autre par leurs parties cylindriques respectives 13. Les plateaux inférieur et supérieur 14 se trouvent alors dans les coupelles 2 et 3. L'évidement tronconique 17 sert de logement à un joint d'étanchéité 19. Les deux membranes 4 et 5 et le noyau 18 constituent l'équipage mobile qui selon la position qu'il occupe, obture l'un ou l'autre des conduits aboutissant dans les coupelles précitées. Ces membranes limitent la chambre intérieure de la microvanne dans laquelle circule le fluide entre les conduits.

Le corps principal 1 de la vanne est coiffé d'une pièce d'extrémité 20 de forme rectangulaire présentant une ouverture centrale 21 et profilée pour correspondre à la coupelle 3 du corps principal 1. Des trous non représentés sont prévus sur la pièce 20 afin d'assurer sa fixation sur le corps principal 1 muni d'orifices de fixation 22 ce qui a pour effet de pincer la membrane 5 entre les deux. La pièce 20 est prévue de dimension plus grande que celle du corps de vanne 1, pour que la partie débordante serve à la fixation de la microélectrovanne, grâce à d'autres trous de fixation 23 dont elle est pourvue. L'ouverture centrale 21 de la pièce d'extrémité 20 sert de logement à un bouchon supérieur 24 lui-même percé d'un orifice central de diamètre identique à l'ouverture axiale 16 du noyau 18. Ledit orifice est chanfreiné pour recevoir la tête d'une vis 25 destinée à traverser tout le corps de vanne comme on le précisera plus loin.

Du côté opposé à la pièce d'extrémité 20, est monté sur le corps principal de vanne 1 une entretoise 26 qui est une pièce rectangulaire d'une certaine hauteur, également munie d'une ouverture centrale 27, et dont la partie supérieure est profilée pour correspondre à la coupelle 2 du corps principal. La fixation de cette entretoise 26 au corps 1, grâce aux orifices 22 permet de pincer la membrane 4 entre les deux. L'ouverture centrale 27 de l'entretoise 26 sert de logement à un organe d'accrochage 28 de forme généralement cylindrique, muni en son centre d'un orifice fileté 29 destiné à recevoir la pointe de la vis 25. La pièce 28 est munie d'un épaulement 30 servant de butée à un ressort 31. La pièce 28, à sa partie inférieure possède une échancrure 32 en forme de T . Dans cette échancrure, s'engage un ergot d'accrochage 33 solidaire du noyau mobile 34, d'un électroaimant 35 lui-même fixé à l'entretoise 26 par des vis 36. Le ressort 31 est ainsi intercalé entre l'organe d'accrochage 28 et l'électroaimant 35.

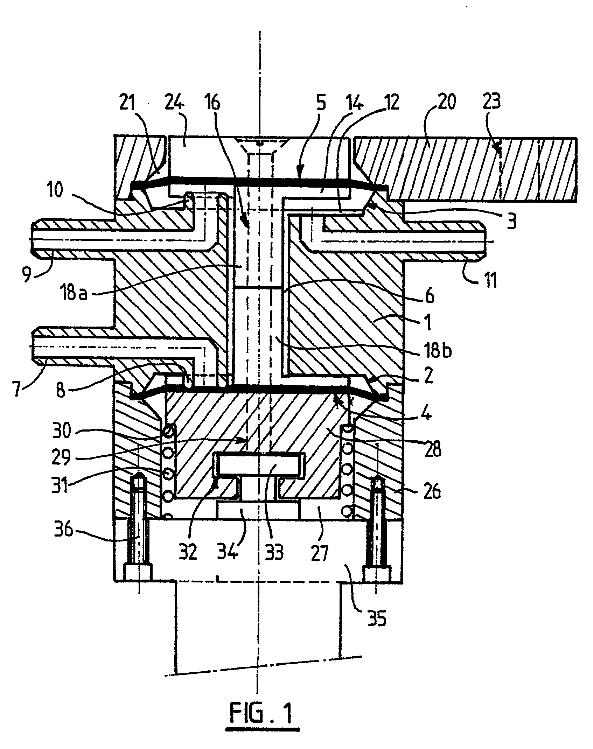

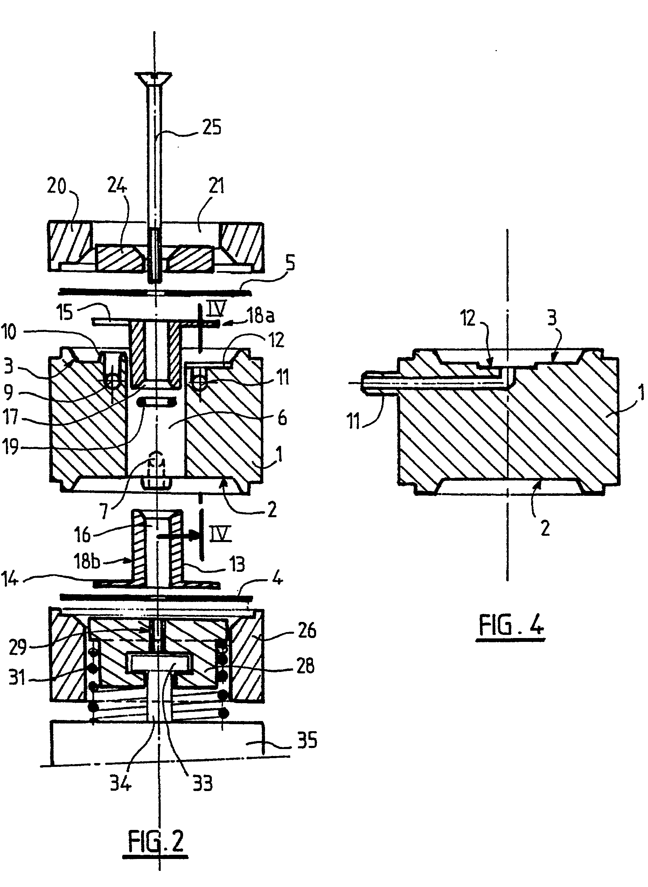

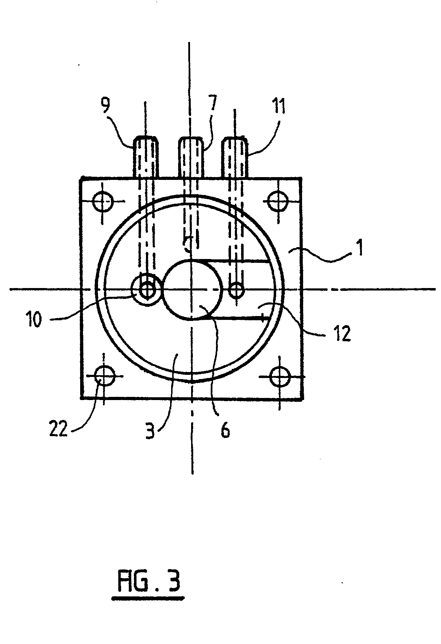

La microélectrovanne telle que représentée à la figure 1 est montée de la façon suivante à partir des éléments de la figure 2. On introduit dans le puits 6 du corps principal 1 les deux éléments de noyau 18a et 18b, les plateaux 14 étant alors en appui au fond des coquilles 2 et 3 et leurs échancrures 15 se positionnant autour des sièges 8 et 10 qui forment un relief au fond des coupelles. On a pris soin au préalable de placer le joint 19 dans un évidement tronconique 17, joint qui se trouvera donc écrasé entre les deux extrémités 13 des noyaux 18a, 18b. Ensuite à l'aide de la vis 15 qui traverse le bouchon 24, la membrane 5 puis la première partie du noyau 18a on solidarise la pièce d'accrochage 28 grâce au filetage 29, avec la seconde partie du noyau 18b, la membrane 4 étant interposée entre les deux. Le serrage de la vis 5 entraîne le pincement des membranes 4 et 5 entre respectivement la pièce d'accrochage 28 et le noyau 18 d'une part et le bouchon 24 et le noyau 18 d'autre part. L'équipage mobile ainsi constitué est fixé au corps principal 1 par l'intermédiaire des membranes 4 et 5 qui se positionnent dans les coupelles correspondantes, et dont les bordures sont pincées contre ledit corps lors de la fixation de la pièce d'extrémité 20 d'un côté, et de l'entretoise 26 de l'autre, cela en mettant à profit les orifices 22 qui traversent le corps 1.

On réalise ensuite l'accrochage de l'ergot 33 du noyau 34 dans l'échancrure 32. Après la fixation de l'électroaimant 35 sur l'entretoise, on a obtenu la pièce représentée à la figure 1.

Le fonctionnement de la microélectrovanne s'effectue de la façon suivante :

On suppose que le fluide est admis par le conduit 11. L'équipage mobile (4, 5, 18) occupe la position haute représentée, qui est la position repos. En effet l'électroaimant 35 n'étant pas excité, le ressort 31 en appui sur l'épaulement 30 de la pièce 28 exerce sur l'équipage mobile une poussée verticale de bas en haut. La membrane inférieure 4 se trouve de ce fait en appui sur le siège 8 contre lequel elle s'écrase et assure par conséquent de façon étanche la fermeture du conduit 7. Au contraire la membrane 5 est dans une position haute pour laquelle elle est écartée du siège 10 libérant le conduit 9. Le fluide passe librement du conduit 11 au conduit 9 et occupe le puits central 6 autour du noyau 18. L'étanchéité est assurée, au niveau du noyau vis à vis de l'ouverture 16 par le petit joint 19, et au niveau des ouvertures 21 et 27 par le pincement des membranes souples autour des coupelles 3 et 2. On a ainsi une étanchéité totale du fluide circulant avec le milieu extérieur de la vanne.

Dès que l'électroaimant 35 est excité le noyau 34 exerce une traction vers le bas de la pièce d'accrochage 28 par l'intermédiaire de l'ergot 33, ce qui entraîne la descente de l'équipage mobile (4, 5, 18) à l'encontre de la force du ressort 31. La membrane 4 s'écarte donc du siège 8, mais par contre la membrane 5 entraînée vers le bas vient s'appliquer contre le siège 10 et ferme le conduit 9. Le fluide passe alors du conduit 11 vers le conduit 7. Il convient néanmoins que cette membrane 5 en position basse n'obture pas l'orifice d'entrée du conduit 11 dans la coupelle 3. Cela explique l'existence de l'évidement 12 mentionné plus haut qui permet le passage normal du fluide entre le conduit 11 et l'intérieur de la microélectrovannne, quelles que soient les positions de la membrane.

On notera que le faible débattement que peut prendre l'équipage mobile (4, 5, 18) permet l'utilisation d'un électroaimant 35 de faible puissance, par exemple de 4 à 6 W, et permet aussi d'obtenir une vanne de petite taille. Les sièges d'étanchéité 8 et 10 également de petites tailles permettent dans le cas d'utilisation avec des liquides comportant des déchets, d'éliminer, grâce au débit de fluide passant par les orifices, les déchets éventuellement bloqués dans la vanne. L'obturation étant assurée par l'une ou l'autre des membranes sur des sièges de petite dimension, et non concentriques à chaque membrane, on peut avoir des fermetures de pression notablement plus élevée qu'avec les vannes classiques.

Ainsi réalisé, le volume mort de la microélectrovanne , c'est-à-dire le volume disponible du puits 6 autour du noyau 18, est restreint ; de ce fait le nettoyage de la vanne peut se faire avec une petite quantité de fluide seulement.

Le fait que le conduit d'alimentation 11 débouche dans une coupelle, permet de faire passer le liquide de rinçage vers le conduit 7 de l'autre coupelle en rinçant la totalité du puits.

On notera que l'on peut manœuvrer la vanne ma-nuellement en appuyant sur le bouchon d'extrémité 24 à l'encontre du ressort 31, puisque ce bouchon affleure à la partie supérieure du boîtier.

Plusieurs de ces vannes de petite dimension peuvent être montées et fixées en batterie à l'aide de la pièce 20. Le fait que les conduits 7, 9, 11 se trouvent d'un même côté du boîtier favorise leur implantation.

Les microélectrovannes dont les éléments sont avantageusement réalisés en matériaux susceptibles de résister aux fluides agressifs trouvent notamment une application particulière dans les matériels d'analyse médicale , mais aussi dans les industries alimentaires et autres.

## Revendications

1. Microélectrovanne à au moins deux voies comportant un boîtier dont deux faces opposées sont fraisées pour former des coupelles, ledit boîtier renfermant une chambre intérieure dans laquelle aboutissent les conduits d'arrivée et de départ de fluide, et un équipage mobile (4, 5, 18) jouant le rôle d'organe obturateur manoeuvré par le noyau mobile (34) d'un électroaimant (35), l'équipage mobile étant essentiellement constitué de deux membranes souples (4 et 5) montées de part et d'autre d'un noyau (18) qui traverse un puits central (6) prévu dans le corps principal (1) de la microélectrovanne, caractérisée par le fait que chaque membrane souple (4, 5) ferme de façon étanche, par une petite partie excentrée de sa surface, le conduit de départ (7, 9) qui débouche dans une zone de la coupelle correspondante (2, 3), écartée du puits central (6) et par le fait que le conduit d'arrivée de fluide (11) débouche dans l'une des coupelles (3) dans une zone également écartée du puits central (6), l'orifice de ce conduit d'arrivée (11) étant agencé de manière à ne pas être obturé par la membrane correspondante.

2. Microélectrovanne selon la revendication 1, caractérisée par le fait que chaque conduit (7, 9) débouche dans la coupelle correspondante (2, 3) à l'intérieur d'une couronne débordant le fond de la coupelle et formant un siège (8, 10) pour l'organe obturateur que constitue chaque membrane (4, 5).

3. Microélectrovanne selon la revendication 1, caractérisée par le fait que le conduit (11) débouche dans une coupelle (3) à l'intérieur d'un évidement (12) réalisé dans le fond de cette coupelle.

4. Microélectrovanne selon la revendication 1, caractérisée par le fait que les trois conduits (7, 9, 11) sortent d'un même côté du boîtier constituant le corps principal de vanne (1).

5. Microélectrovanne selon la revendication 1, caractérisée par le fait que le noyau de l'équipage mobile est formé de deux parties identiques (18a) et (18b) dont chacune est constituée d'un cylindre (13) se terminant par un plateau (14) muni d'une échancrure (15) et traversée sur toute sa hauteur d'une ouverture axiale (16).

6. Microélectrovanne selon la revendication 5, caractérisée par le fait que les deux parties (18a) et (18b) du noyau sont en butée l'une contre l'autre par l'extrémité de leur partie cylindrique dont un évidement tronconique (17) sert de logement à un joint d'étanchéité (19).

7. Microélectrovanne selon la revendication 1, dont les deux faces opposées du corps principal (1) de la vanne sont coiffées de pièces d'extrémité (20, 26) munies d'ouvertures centrales (21, 27) qui sont fixées au corps principal et pincent chacune des membranes (4, 5) sur les bords des coupelles (2, 3), caractérisée par le fait que l'ouverture centrale (21) de la pièce d'extrémité (20) sert de logement à un bouchon supérieur (24) en appui sur la membrane (5).

8. Microélectrovanne selon la revendication 7, dont la pièce d'extrémité (26) sert d'entretoise support de l'électroaimant (35), caractérisée par le fait que l'ouverture centrale (27) de la pièce d'extrémité (26) sert de logement à un organe d'accrochage (28) du noyau mobile (34) de l'électroaimant (35).

9. Microélectrovanne selon la revendication 8, caractérisée par le fait qu'un ressort (31) est intercalé entre l'organe d'accrochage (28) du noyau mobile (34) et l'électroaimant (35).

10. Microélectrovanne selon les revendications l, 7 et 8, caractérisée par le fait que les diverses pièces composant l'équipage mobile sont rendues solidaires à l'aide d'une vis (25) qui traverse le bouchon supérieur (24), la membrane (5), le noyau (18), la membrane (4) et qui coopère avec un orifice fileté (29) prévu dans l'organe d'accrochage (28).

**Patentansprüche**

1. Mikroelektroventil, insbesondere für Flüssigkeiten, mit wenigstens zwei Wegen, welches ein Gehäuse umfaßt, dessen zwei einander gegenüberliegende Seiten in Form von schalenartigen Vertiefungen ausgefräst sind, wodurch das Gehäuse Innenkammern bildet, in die Zuführ- und Abführleitungen einmünden, und ein bewegbares Verschlußorgan (4, 5, 18) bildendes Teil umfaßt, das durch den bewegbaren Ankerkern (34) eines Elektromagneten (35) betätigbar ist, wobei das bewegbare Verschlußorgan im wesentlichen aus zwei biegsamen Membranen (4 und 5) besteht, die beiderseits eines Kernteils angebracht sind, welches durch eine in dem Hauptkörper (1) des Elektroventils vorgesehene Mittenbohrung (6) hindurchgeht, dadurch gekennzeichnet, daß jede biegsame Membran (4, 5) durch einen kleinen außermittigen Teil ihrer Oberfläche dicht verschließen kann, die Abführleitung (7, 9) in einen Bereich der jeweiligen schalenartigen Vertiefung (2, 3) abseits der Mittenbohrung (6) einmündet und daß die Flüssigkeitszuführleitung (11) in einer der Vertiefungen (3) in einen gleichfalls abseits der Mittenbohrung angeordneten Bereich einmündet, wobei die Mündung dieser Zuführleitung (11) derart angeordnet ist, daß sie durch die jeweilige Membran nicht verschlossen werden kann.

2. Mikroelektroventil nach Anspruch 1, dadurch gekennzeichnet, daß jede der Leitungen (7, 9) in die jeweilige schalenartige Vertiefung (2, 3) im Innern des Ventils in einem ringförmigen Wulst am Grunde der Vertiefung ausmündet, welcher einen Sitz (8, 10) für den von jeder Membran (4, 5) gebildeten Verschlußorgan darstellt.

3. Mikroelektroventil nach Anspruch 1, dadurch gekennzeichnet, daß die Leitung (11) in einer schalenartigen Vertiefung (3) in Innern einer Aussparung (12) in dem Boden dieser Vertiefung ausmündet.

4. Mikroelektroventil nach Anspruch 1, dadurch gekennzeichnet, daß die drei Leitungen (7, 9, 11) von der gleichen Seite des Gehäuses (1) ausgehen, das den Hauptkörper des Ventils bildet.

5. Mikroelektroventil nach Anspruch 1, dadurch gekennzeichnet, daß der Kern (18) des bewegbaren Verschlußorgans aus zwei identischen Teilstücken (18a, 18b) besteht, deren jedes ein Zylinderteil (13) umfaßt, das in einem Scheibenteil (14) mit einem Ausschnitt (15) endet und in seiner ganzen Länge von einer Axialbohrung (16) durchzogen wird.

6. Mikroelektroventil nach Anspruch 5, dadurch gekennzeichnet, daß die beiden Teilstücke (18a, 18b) des Kerns mit den Enden ihres jeweiligen Zylinderteils gegeneinander stoßen und dort eine kegelstumpfförmige Ausnehmung (17) aufweisen, die als Sitz für einen Dichtungsring (19) dient.

7. Mikroelektroventil nach Anspruch 1, dessen einander gegenüberliegende Flächen des Hauptkörpers (1) mit Endstücken (20, 26) mit zentralen Öffnungen (21, 27) besetzt sind, die durch ihre Befestigung Membranen auf dem Rand von Vertiefungen festhalten, dadurch gekennzeichnet, daß die Zentralöffnung (21) des einen Endstückes (20) als Sitz für einen oberen, auf der Membran (5) aufliegenden Druckknopf (24) dient.

8. Mikroelektroventil nach Anspruch 7, dessen Endstück als Träger für einen Elektromagneten dient, dadurch gekennzeichnet, daß die Zentralöffnung (27) des anderen Endstückes (26) als Führung für ein Kuppelstück (28) des bewegbaren Ankerkerns (34) des Elektromagneten (35) dient.

9. Mikroelektroventil nach Anspruch 8, dadurch gekennzeichnet, daß zwischen dem Kuppelstück (28) des bewegbaren Ankerkerns (34) und dem Elektromagneten (35) eine Druckfeder (31) eingefügt ist.

10. Mikroelektroventil nach den Ansprüchen 1, 7 und 8, dadurch gekennzeichnet, daß die verschiedenen Teilstücke des bewegbaren Verschlußorgans mit Hilfe einer Schraube (25) zusammengehalten sind, die durch den oberen Knopf (24) die eine Membrane (5), den Kern (18) und die andere Membrane (4) hindurchführt und in einer im Kuppelstück (28) vorgesehenen Gewindebohrung (29) gehalten ist.

**Claims**

1. Micro-electrovalve with at least two ways consisting of a housing of which at least two opposing faces are milled to form cups, said housing enclosing an internal chamber into which run fluid inlet and outlet pipes, and a movable assembly (4, 5, 18) which serves as a blocking organ manipulated by the movable core (34) of an electromagnet (35), the movable assembly consisting essentially of two flexible diaphragms (4 and 5) fittes on both sides of a core (18) which traverses a central well (6) of the main body (1) of the micro-electrovalve, characterised in that each of the flexible diaphragms (4, 5), by means of a small offset part of its surface, closes in a sealed manner the outlet pipe (7, 9) which emerges in a zone of the corresponding cup (2, 3) which is separated from the central well (6) and in that the fluid inlet pipe (11) emerges into one of the cups (3) in a zone which is also separated from the central well (6), the orifice of this inlet pipe (11) being arranged in such a way that it is not blocked by the corresponding diaphragm.

2. Micro-electrovalve according to Claim 1, characterised in that each pipe (7, 9) emerges into the corresponding cup (2, 3) within a crown which stands proud of the base of the cup, forming a seat (8, 10) for the blocking organ which is formed by each diaphragm (4, 5).

3. Micro-electrovalve according to Claim 1, characterised in that the pipe emerges into a cup (3), within a recess (12) made in the base of this cup.

4. Micro-electrovalve according to Claim 1, characterised in that the three pipes (7, 9, 11) emerge from the same side of the housing which forms the main valve body (1).

5. Micro-electrovalve according to Claim 1, characterised in that the core of the movable assembly consists of two identical parts (18a and 18b), each which consists of a cylinder (13) terminating in a plate (14) with a slot (15) and traversed along the whole of its height by an axial aperture (16).

6. Micro-electrovalve according to Claim 5, characterised in that the two parts (18a and 18b) of the core are butted one against the other at the end of their cylindrical part of which a truncated recess (17) serves as a seat for a sealing joint (19).

7. Micro-electrovalve according to Claim 1, of which the two opposing faces of the main body (1) of the valve are fitted with end pieces (10, 26) provided with central apertures (21, 27) which are fixed to the main body and which clamp each of the diaphragms (4, 5) on the sides of the cups (2, 3), characterised int that the central aperture (21) of the end piece (20) acts as a seat for an upper plug (24) pressing against the diaphragm (5).

8. Micro-electrovalve according to Claim 7, of which the end piece (26) acts as a brace support for the electromagnet (35), characterised in that the central aperture (27) of the end piece (26) acts as a seat for a fixing organ (28) of the movable core (34) of the electromagnet (35).

9. Micro-electrovalve according to Claim 8, characterised in that a spring (31) is interposed between the fixing organ (28) of the movable core (34) and the electromagnet (35).

10. Micro-electrovalve according to Claim 1, 7 and 8, characterised in that the various parts which make up the movable assembly are redered rigid by means of a screw (25) which passes through the upper plug (24), the diaphragm (5), the core (18), the diaphragm (4) and which works with a threaded orifice (29) provided int the fixing organ (28).

FIG . 1

FIG. 2

FIG. 4

FIG. 3